Europäisches Patentamt

European Patent Office

Office européen des brevets

(11) Publication number: **0 418 002 A1**

# EUROPEAN PATENT APPLICATION

(21) Application number: **90309855.6**

(22) Date of filing: **10.09.90**

(51) Int. Cl.5: **F16B 39/22, F16B 39/282, F16B 39/24**

(30) Priority: **09.09.89 GB 8920444**
**14.12.89 GB 8928305**

(43) Date of publication of application:
**20.03.91 Bulletin 91/12**

(84) Designated Contracting States:
**AT BE CH DE DK ES FR GB GR IT LI LU NL SE**

(71) Applicant: **WESTWOOD FINANCE LIMITED**
**Westwood House, Little Lane**
**Goose Green, Greater Manchester WN3**
**6PT(GB)**

(72) Inventor: **Barnes, George William**
**71 Queens Road**
**Southport, Merseyside(GB)**

(74) Representative: **Taylor, Phillip Kenneth et al**
**W.P. THOMPSON & CO. Coopers Building**
**Church Street**
**Liverpool L1 3AB(GB)**

(54) Locking fastener.

(57) A bolt (10) is provided with a screw-threaded shank portion (16) which is adapted to receive a complementarily threaded nut (12) thereon. In use, the shank is passed through an aperture (18) in an object (20) to be secured and the nut threaded on the shank. As the nut is tightened, a projection (32) on the undersurface (26) of the nut engages with the surface of the object (20) and causes a slight pivot-ing of the nut. This results in misalignment of the threads of the shank (16) and of the nut (12) and causes a frictional locking between the two.

In other embodiments, the projection is provided on the head of the bolt and on a washer interposed between the nut (12) and the object (20) or the bolt head (14) and the object (20).

FIG.1

FIG.3

EP 0 418 002 A1

## LOCKING FASTENER

The present invention relates to locking fasteners, and in particular, but not exclusively, to fastener assemblies and components thereof which are resistant to inadvertent unfastening.

Self-locking fasteners and lock nuts are well known. Most are provided with teeth on one face which engage and partially penetrate the object to be secured, thereby preventing inadvertent unfastening due to vibration. However, since the teeth partially penetrate the object to be secured, such fasteners are not particularly suitable for use where it might be necessary to remove the fastener at a later time. Also, if the fastener has to be removed and reapplied, the fastening action will be less each time, since the indentations will have already been made on a previous occasion.

A different locking device employs a locking nut with a locking lever cut into the surface of the locking face. Such a locking nut cannot however be cold formed as a single unit but has to have a slit formed in it after the cold forming operation. This adds to the cost of the product.

Another type of locking nut has a plastics insert provided next to the female mating thread at the end adjacent to the mating face. In operation, the plastics is deformed by the engagement with the threaded shank of a bolt, and provides a frictional force between the nut and the bolt, and thus producing a locking action. It does however provide unwanted resistance as it is tightened.

In accordance with a first aspect of the present invention, there is provided a fastener assembly component adapted to form part of a fastener assembly which comprises a bolt having a head and a threaded shank portion adapted to pass through an aperture in an object to be secured and a nut screw-threadedly received on the threaded shank portion, the fastener assembly component being provided with a projection which, in use, is located between a bearing face of the nut and a bearing face of the bolt to provide a friction a locking between the nut and the threaded shank when the nut is tightened on the shank.

In one embodiment, the fastener assembly component comprises the nut which forms part of the fastener assembly, the projection being on the bearing face of the nut.

In another embodiment, the fastener assembly component comprises the bolt which forms part of the fastener assembly, the projection being on the bearing face of the bolt.

In another embodiment, the fastener assembly component comprises a washer which in use, is located on the threaded shank between the bolt head and the nut.

The height of the projection is preferably less than or equal to the thread pitch, preferably from 10% to 90% of the pitch and more preferably from 15% to 85% of the thread pitch.

The projection may be formed integrally with the fastener assembly component, or may be formed later, e.g. by locating a pin in a blind bore in the component.

In accordance with a second aspect of the present invention, there is provided a nut having an internally screw-threaded portion adapted to be received on a complementarily threaded shank portion of a securing member which in use passes through an aperture in an object to be secured, the nut being provided with a projection on its engagement face to provide a frictional locking between the nut and the screw-threaded shank portion when the nut is tightened on the screw-threaded shank to engage the projection with the object to be secured.

In accordance with a third aspect of the present invention, there is provided a bolt having a head and a screw-threaded shank portion which, in use, passes through an aperture in an object to be secured and which is adapted to threadedly receive a complementarily-threaded nut, the head of the bolt being provided with a projection on its engagement face to provide a frictional locking between the bolt and the nut when the nut is tightened on the shank to engage the object to be secured.

In accordance with a fourth aspect of the present invention, there is provided a washer adapted to be received on the threaded shank of a bolt forming part of a bolt assembly, the threaded shank, in use, passing through an aperture in an object to be secured and being adapted to receive a complementarily threaded nut forming part of the bolt assembly, the washer being provided with a projection and, in use, being located between the bolt head and the nut to provide a frictional locking between the screw-threaded shank portion and the nut when the nut is tightened on the screw-threaded shank portion to engage the projection with the bolt head, the object to be secured, or the nut.

In accordance with a fifth aspect of the present invention, there is provided a fastener assembly comprising an internally threaded nut adapted to be screw-threadedly received on a complementarily threaded shank of a bolt, the shank, in use, passing through an aperture in an object to be secured, and further comprising a projection on the engagement face of the bolt or the nut to provide a frictional locking between the nut and the threaded shank of the bolt when the nut is tightened to engage the projection with the object to be secured.

By way of example only, specific embodiments of the present invention will now be described, with reference to the accompanying drawings, in which:-

Fig. 1 is a side view of a first embodiment of fastener assembly in accordance with the present invention, comprising a nut in accordance with the present invention;

Fig. 2 is an enlarged cross-section through a portion of the assembly of Fig. 1;

Fig. 3 is a perspective view of an alternative embodiment of nut in accordance with the present invention, which may be used with the assembly of Fig. 1;

Fig. 4 is a side view of a second embodiment of fastener assembly in accordance with the present invention, comprising a bolt in accordance with the present invention;

Fig. 5 is an enlarged cross-section through a portion of the assembly of Fig. 4;

Fig. 6 is a side view of a third embodiment of fastener assembly in accordance with the present invention, comprising a washer in accordance with the present invention; and

Fig. 7 is an enlarged cross-section through a portion of the assembly of Fig. 6.

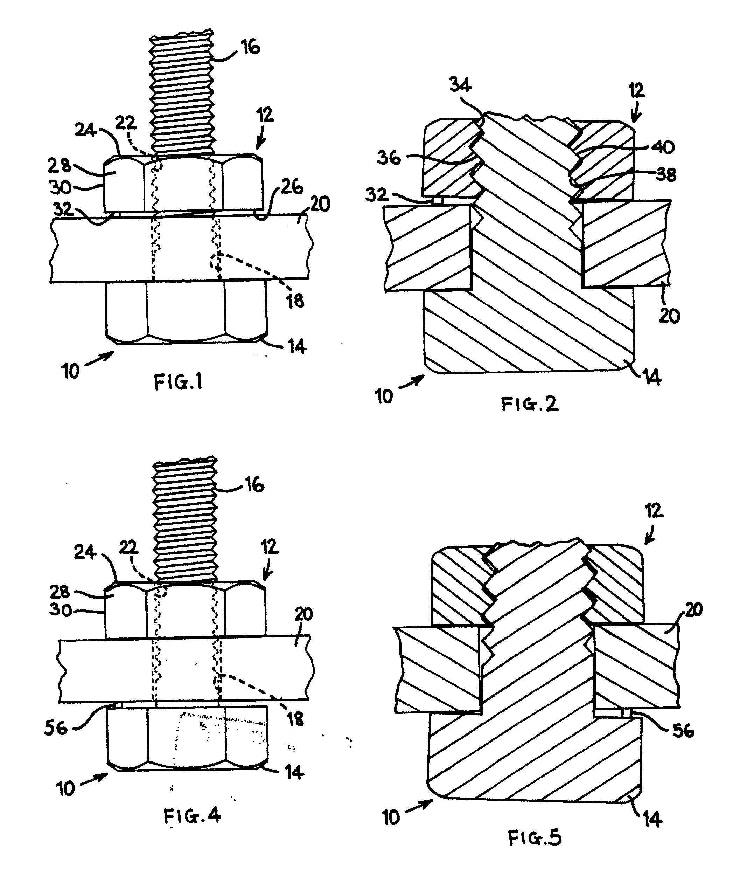

Referring firstly to Fig. 1, a fastener assembly comprises a bolt 10 and a nut 12. The bolt 10 is provided with a conventional hexagonal head 14 and a screw-threaded shank 16. In use, the threaded shank 16 of the bolt is passed through an aperture 18 in an article 20 to which the assembly is to be secured, and the shank 16 receives the nut 12 which is provided with a complementarily-threaded central aperture 22. The metal nut 10 is externally hexagonal, and is provided with an external, generally planar, upper face 24 and a generally planar abutment face 26. The six faces 28 of the nut are defined by six parallel edges 30 which extend parallel to the longitudinal axis of the threaded bore 22 of the nut.

It will also be noted that the abutment surface 26 of the nut is provided with a projection 32 which extends outwardly from the face 26. This projection is generally rectangular in cross-section, and its height from the generally planar abutment surface 26 is equal to half the height of the pitch of the screw threads of the shank 16 of the bolt or the threaded aperture 22 of the nut.

In use, the threaded shank 16 of the bolt is passed through the aperture in the object 20 to which the fastener assembly is to be secured, with the undersurface of the head 14 of the bolt in contact with the object 20. The nut 12 is then threaded on the threaded shank 16 and is advanced along the shank. As the nut is advanced, the projection 32 will eventually come into contact with the object 20. As best seen in Fig. 2, further tightening of the nut 12 will cause the nut to pivot slightly about the projection 28, thus tending to force the upwardly facing surfaces 34 on the side of the nut adjacent to the projection 32 into engagement with the opposite downwardly facing surfaces 36 of the threaded shank, and causing the downwardly facing surfaces 38 of the thread of the nut on the opposite side into engagement with the upwardly facing surfaces 40 of the threaded shank 16. This feature is exaggerated in Fig. 2, in order to show it clearly. In other words, the female thread of the nut and the male thread of the shank no longer run true, and the nut is thus frictionally held in position on the shank, and is thus resistance to unthreading resulting from vibration of the assembly.

The projection 32 may be produced by filing down the abutment face 26 of the nut to leave an upstanding lug, or it may be formed on the abutment face 26 in the manufacturing process of the nut, for example by cold forming or casting. The illustrated projection has a generally flat tip and is rectangular in cross section, but it would be possible to have projections of other shapes, and in particular a conical projection having a height of half the thread pitch would be particularly useful.

Although the height of the embodiment described is equal to one half of the thread pitch, it is envisaged that the height of the projection may be any height from 10% to 90% of the thread pitch, and preferably from 15% to 85% of the thread pitch.

Fig. 3 illustrates an alternative embodiment of nut and this nut could be used to replace the nut 1S in Fig. 1. The nut 42 is almost identical to the nut 12 of Fig. 1, and the same reference numerals have been used to identify identical features. However, the projection 32 is dispensed with and instead the nut 10 is provided with a blind bore 46 extending parallel to the edges of the nut and the longitudinal direction of the threaded aperture of the nut, the bore being provided in the abutment face 26 thereof. The bore 44 is adapted to receive a pin 46 having a length which is greater than the depth of the bore by an amount equal to half the pitch of the thread of the nut. The diameter of the bore and of the pin are chosen such that the pin 46 is a press-fit in the bore 44. The pin 46 may be of the same material as the nut 42, or alternatively could be of a different material. For example, it would be possible to make the pin of a softer metal (e.g. brass if the nut were made of steel) such that the pin would deform radially when compressed, and thereby be secured in the bore 44. Alternatively, if desired, the pin 46 could be welded or glued in position in the bore, or may simply be left removable as illustrated and as previously described if desired.

A further embodiment of the present invention is illustrated in Figs. 4 and 5, in which the bolt assembly is almost identical to that of Fig. 1, with the same reference numerals identifying identical features. However, the projection 28 is absent, and instead an identical projection 56 extends from the abutment surface of the head 14 of the bolt, such that, in use, the projection 56 engages the surface of the object 20 to be secured which is adjacent to the bolt head. Again, the misalignment of the threads of the shank 16 and of the bolt 12 cause the threads of the bolt and the nut to frictionally engage with one another.

As illustrated in Figs. 4 and 5, when the nut is advanced along the shank, it eventually comes into contact with the article 20 to be secured, and causes the article to be clamped between the nut and the head of the bolt. However, because of the presence of the projection 56; on the undersurface of the bolt head, further tightening of the nut causes the bolt to pivot slightly about the projection 56 and cause the threads to engage frictionally as seen in Fig. 5 as a result of the slight misalignment of the threads of the shank 16 and the nut 12. This feature is exaggerated in Fig. 5, to show it clearly.

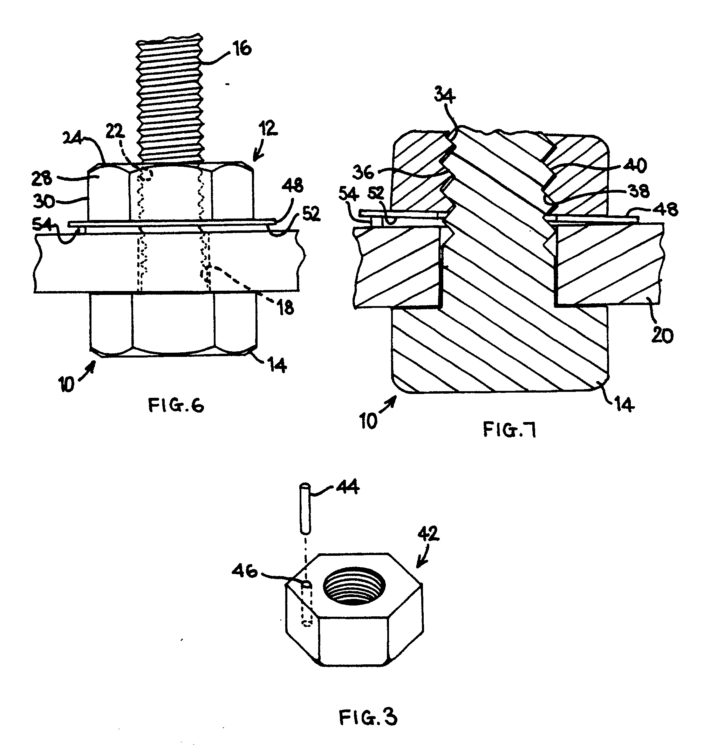

With reference to Figs. 6 and 7, a further embodiment of fastener assembly is illustrated. In this embodiment the bolt 10 is almost identical to that of the first embodiment, and the same reference numerals have been used to identify identical features. The nut 12 is identical to that of the first embodiment apart from the omission of the projection 32. It will be noted that a washer 48 having a central circular aperture 50 is located on the threaded shank 16 of the bolt inbetween the nut 12 and the object 20 to which the fastener assembly is to be secured. It will also be noted that the surface 52 which, in use, faces the object to be secured, is provided with a lug 54 whose height is equal to half the thread pitch of the shank 16 and nut 12.

As illustrated in Figs. 6 and 7, when the nut is advanced along the shank, it eventually comes into contact with the washer, whose projection 54 already abuts the object to be secured. Further tightening of the nut causes the washer 48 to pivot about the projection 54, thereby causing a frictional engagement of the threads of the shank 16 and the nut 12 as described for the Fig. 1 embodiment. As for the Fig. 1 embodiment, this feature is exaggerated in Fig. 7.

Alternatively, the identical components may be used, but the washer 48 may be disposed between the head 14 of the bolt and the object 20 to be secured, the projection 54 on the washer engaging the opposite surface of the object 20 to be secured. Alternatively, in each of the cases discussed above for Figs. 6 and 7, the washer could be reversed such that the projection engaged the nut and the head of the bolt respectively.

It should be noted that the "bolt" referred to in this application should be taken as including any body from which a threaded shank extends, and should not be restricted to a conventional bolt head, and the claims should be construed accordingly.

## Claims

1. A fastener assembly component adapted to form part of a fastener assembly which comprises a bolt having a head and a threaded shank portion adapted to pass through an aperture in an object to be secured and a nut screw-threadedly received on the threaded shank portion, the fastener assembly component being provided with a projection which, in use, is located between a bearing face of the nut and a bearing face of the bolt to provide a frictional locking between the nut and the threaded shank when the nut is tightened on the shank.

2. A fastener assembly component as claimed in claim 1, wherein the fastener assembly component comprises the nut which forms part of the fastener assembly, the projection being provided on the bearing face of the nut.

3. A fastener assembly component as claimed in claim 1, wherein the fastener assembly component comprises the bolt which forms part of the fastener assembly, the projection being provided on the bearing face of the bolt.

4. A fastener assembly component as claimed in claim 1, wherein the fastener assembly component comprises a washer which, in use, is located on the threaded shank between the bolt head and the nut.

5. A fastener assembly component as claimed in any of the preceding claims, wherein the height of the projection is less than or equal to the thread pitch of the threaded shank portion.

6. A fastener assembly component as claimed in claim 5, wherein the height of the projection is from 10% to 90% of the thread pitch of the threaded shank portion.

7. A fastener assembly component as claimed in claim 6, wherein the height of the projection is from 15% to 85% of the thread pitch of the threaded shank portion.

8. A fastener assembly component as claimed in claim 7, wherein the height of the projection is substantially equal to half the thread pitch of the threaded shank portion.

9. A fastener assembly component as claimed in any of the preceding claims, wherein the fastener assembly component is provided with a recess adapted to receive an elongage member which, in use, projects out of the aperture to form the projection.

10. A fastener assembly component as claimed in claim 9, wherein the recess comprises a blind bore.

11. A fastener assembly component as claimed in claim 9 or claim 10, wherein the elongate member is formed from the same material as the fastener assembly component.

12. A fastener assembly component as claimed in claim 11, wherein the elongate member is formed from a different material than that of the fastener assembly component.

13. A fastener assembly component as claimed in claim 12, wherein the material of the fastener assembly component is harder than that of the elongate member.

14. A nut having an internally screw-threaded portion adapted to be received on a complementarily threaded shank portion of a securing member which in use passes through an aperture in an object to be secured, the nut being provided with a projection on its engagement face to provide a frictional locking between the nut and the screw-threaded shank portion when the nut is tightened on the screw-threaded shank to engage the projection with the object to be secured.

15. A bolt having a head and a screw-threaded shank portion which, in use, passes through an aperture in an object to be secured and which is adapted to threadedly receive a complementarily-threaded nut, the head of the bolt being provided with a projection on its engagement face to provide a frictional locking between the bolt and the nut when the nut is tightened on the shank to engage the object to be secured.

16. A washer adapted to be received on the threaded shank of a bolt forming part of a bolt assembly, the threaded shank, in use, passing through an aperture in an object to be secured and being adapted to receive a complementarily threaded nut forming part of the bolt assembly, the washer being provided with a projection and, in use, being located between the bolt head and the nut to provide a frictional locking between the screw-threaded shank portion and the nut when the nut is tightened on the screw-threaded shank portion to engage the projection with the bolt head, the object to be secured, or the nut.

17. A fastener assembly comprising an internally threaded nut adapted to be screw-threadedly received on a complementarily threaded shank of a bolt, the shank, in use, passing through an aperture in an object to be secured, and further comprising a projection on the engagement face of the bolt or the nut to provide a frictional locking between the nut and the threaded shank of the bolt when the nut is tightened to engage the projection with the object to be secured.

FIG.1

FIG.2

FIG.4

FIG.5

FIG.6

FIG.7

FIG.3

## DOCUMENTS CONSIDERED TO BE RELEVANT

EP 90309855.6

| Category | Citation of document with indication, where appropriate, of relevant passages | Relevant to claim | CLASSIFICATION OF THE APPLICATION (Int. Cl.5) |
|---|---|---|---|
| X | <u>US - A - 4 220 187</u> (HOLMER) <br> * Fig. 3; abstract * | 1,2,5, 14 | F 16 B 39/22 <br> F 16 B 39/282 <br> F 16 B 39/24 |
| A | * Fig. 3; abstract * | 3,4,6, 7,11, 15,17 | |
| A | <u>GB - A - 1 493 558</u> (TEXTRON) <br> * Fig. * | 1,4, 14,15, 16,17 | |
| A | <u>US - A - 4 157 725</u> (STANAITIS) <br> * Abstract; fig. * | 1,4, 14,15, 16,17 | |
| A | <u>DE - A - 1 475 044</u> (ILLINOIS TOOL WORKS) <br> * Fig. * | 1,4, 14,15, 16,17 | |

TECHNICAL FIELDS
SEARCHED (Int. Cl.5)

F 16 B 39/00
F 16 B 41/00
F 16 B 43/00

The present search report has been drawn up for all claims

| Place of search | Date of completion of the search | Examiner |
|---|---|---|
| VIENNA | 15-10-1990 | RIEMANN |

EPO FORM 1503 03.82 (P0401)